(19) Europäisches Patentamt
European Patent Office
Office européen des brevets

(11) **EP 3 564 627 A1**

(12) **EUROPÄISCHE PATENTANMELDUNG**

(43) Veröffentlichungstag:
**06.11.2019 Patentblatt 2019/45**

(51) Int Cl.:
*G01D 5/14* (2006.01)  *G01D 5/347* (2006.01)

(21) Anmeldenummer: **18170600.3**

(22) Anmeldetag: **03.05.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Giessler, Folke**
**96170 Lisberg (DE)**

(54) **VERFAHREN UND VORRICHTUNG ZUR BESTIMMUNG EINES DREHWINKELS EINER WELLE ODER EINES ZYLINDERS SOWIE ANTRIEB, MÜHLE UND HERSTELLUNGSVERFAHREN**

(57)  Zusammenfassend betrifft die Erfindung ein Verfahren und eine Vorrichtung zur Bestimmung eines Drehwinkels (φ) eines Zylinders (1a) oder einer Welle (1). Die Bestimmung des Drehwinkels (φ) erfolgt mit Hilfe einer Maßverkörperung (3), wobei die Maßverkörperung (3) vorzugsweise um die Mantelfläche der Welle (1) oder des Zylinders (1a) herum geführt ist. Die Maßverkörperung (3) ist vorteilhaft als gewelltes Metallband ausgebildet. Die Maßverkörperung (3) weist abwechselnd erste Bereiche (B1) und zweite Bereiche (B2) auf, wobei die ersten Bereiche (B1) und die zweiten Bereiche (B2) mittels des Sensors (5) unterscheidbar ausgebildet sind.

Der von der Maßverkörperung (3) beabstandet positionierte Sensor (5) dient vorteilhaft zur Bestimmung des Abstandes (d1, d2) zwischen dem Sensor (5) und der Oberfläche der Maßverkörperung (3). Bei einem vorteilhaften Verfahren zur Herstellung der Vorrichtung wird die Maßverkörperung um die Welle (1) oder den Zylinder (1a) gewickelt und der Sensor (5) beabstandet von der Maßverkörperung (3) positioniert. Durch die Erfindung ist es möglich, einen Drehwinkel (φ) von Wellen (1) oder Zylindern (1a) mit einem besonders großen Durchmesser einfach zu bestimmen.

FIG 2

EP 3 564 627 A1

**Beschreibung**

Die Erfindung betrifft ein Verfahren und eine Vorrichtung zur Bestimmung eines Drehwinkels einer Welle oder eines Zylinders. Darüber hinaus betrifft die Erfindung einen Antrieb und eine Mühle. Schließlich betrifft die Erfindung ein Herstellungsverfahren.

Mühlen, insbesondere direkt-angetriebene Erzmühlen, weisen in der Regel eine zylinderförmige Mahltrommel mit einem großen Durchmesser auf. Bei Erzmühlen kann der Durchmesser des Mahlrohrs der Mühle mehrere Meter betragen. Insbesondere bei direkt angetriebenen Erzmühlen ist die Bestimmung des Drehwinkels oder der Drehzahl des Mahlrohrs schwierig, da ein Geber aufgrund des großen Durchmessers des Mahlrohrs schwierig zu installieren ist.

Demnach ist es Aufgabe der Erfindung, ein Verfahren und eine Vorrichtung bereitzustellen, mit welchen ein Drehwinkel oder die Drehzahl leicht bestimmt werden können.

Die Aufgabe wird durch ein Verfahren nach Anspruch 1 gelöst. Die Aufgabe wird weiter durch eine Vorrichtung nach Anspruch 7 gelöst. Darüber hinaus wird die Aufgabe durch eine Mühle gemäß Anspruch 13 gelöst. Schließlich wird die Aufgabe durch ein Verfahren zur Herstellung einer Vorrichtung zur Bestimmung eines Drehwinkels einer Welle oder eines Zylinders gemäß Anspruch 13 gelöst.

Das Verfahren dient zur Bestimmung eines Drehwinkels einer Welle oder eines Zylinders, insbesondere einer Mahltrommel. Hierbei weist die Welle oder der Zylinder an einer Außenseite eine Maßverkörperung auf, wobei die Maßverkörperung abwechselnd erste und zweite Bereiche aufweist, wobei anhand eines Wechsels der Bereiche oder einer Eigenschaft der Maßverkörperung der Drehwinkel der Welle oder des Zylinders festgestellt wird.

Als Eigenschaft der Maßverkörperung dient vorzugsweise eine mit einem Sensor erfassbare äußere Form oder Farbe der Maßverkörperung. Vorzugsweise kann die Maßverkörperung eine Skala aufweisen, wobei die Skala mit Hilfe des Sensors erfasst wird, um den Drehwinkel der Welle oder des Zylinders zu bestimmen.

Die Bestimmung des Drehwinkels erfolgt vorzugsweise in einer Auswerteeinheit, die dem Sensor zugeordnet ist. Die Auswerteinheit kann den Drehwinkel an eine Stromquelle einer elektrischen Maschine bereitstellen.

Als Maßverkörperung dient vorzugsweise ein Band, welches um die Mantelfläche der Welle oder des Zylinders befestigt wird. Vorteilhaft kann die Maßverkörperung als Wellblech ausgebildet sein, welches um den Zylinder oder die Welle geführt ist.

Die Maßverkörperung dient vorteilhaft zum Ersatz eines gelegentlich verwendeten Zahnrades. Insbesondere für große Durchmesser einer Welle oder eines Zylinders ist ein solches starr ausgebildetes Zahnrad nachteilhaft kompliziert in der Fertigung.

Alternativ oder zusätzlich kann eine bereits vorhandene Struktur wie ein Zahnkranz als Maßverkörperung dienen. Vorteilhaft kann die Maßverkörperung auch durch eine Farbauftragung ausgebildet sein. Anhand des Zahnkranzes oder des Farbauftrags kann, insbesondere mit einem geeigneten Sensor, die Bestimmung des Drehwinkels erfolgen.

Die Befestigung der Maßverkörperung erfolgt mit Hilfe von Befestigungsmitteln an den Stellen, an denen die Maßverkörperung die Mantelfläche berührt.

Die Maßverkörperung weist abwechselnd erste Bereiche und zweite Bereiche auf. Die ersten Bereiche und die zweiten Bereiche können von dem Sensor unterschieden werden. Optional oder zusätzlich registriert der Sensor einen Wechsel der Bereiche.

Vorzugsweise gehen die ersten Bereiche und die zweiten Bereiche stetig ineinander über. Beispielhaft ist die Maßverkörperung als sinusförmig-gewelltes Metallband ausgestaltet, welches um die Mantelfläche der Welle oder des Zylinders herum gewickelt ist. In diesem Fall ist der jeweils erste Bereich derjenige Bereich, bei dem der Abstand zwischen der Oberfläche der Maßverkörperung und dem Sensor kleiner als der gemittelte Abstand zwischen Sensor und der Oberfläche der Maßverkörperung ist. Der jeweils zweite Bereich ist derjenige Bereich, bei dem der Abstand zwischen der Oberfläche der Maßverkörperung und dem Sensor größer als der mittlere Abstand zwischen der Oberfläche der Maßverkörperung und dem Sensor ist.

Der Sensor bestimmt vorzugsweise den Abstand der Oberfläche der Maßverkörperung zum Sensor. Bei einer sinusförmig gewellten Maßverkörperung nimmt der Abstand sinusförmig zu und ab. Der Sensor stellt vorzugsweise ein sinusförmiges Signal entsprechend dem Abstand zwischen der Oberfläche der Maßverkörperung und dem Sensor bereit. Anhand des Signals kann der Drehwinkel der Welle oder des Zylinders bestimmt werden. Der Drehwinkel ist vorzugsweise definiert als ein Winkel zwischen der Position auf der Maßverkörperung, die von dem Sensor erfasst wird, und einer Nullstellung des Zylinders oder der Welle.

Vorzugsweise wird der Drehwinkel in Bezug zu einem ausgezeichneten Drehwinkel der Welle oder des Zylinders bestimmt.

Alternativ oder zusätzlich kann die Maßverkörperung eine Markierung aufweisen, welche der Sensor erfasst oder abtastet. Die Markierung kann optisch oder magnetisch erfasst werden. Eine magnetische Markierung ist vorzugsweise als eine Art Nocken ausgebildet, die durch den Sensor abgetastet werden.

Der Sensor für eine magnetische Maßverkörperung ist vorzugsweise ein Magnetfeldsensor, beispielsweise ein Hall-Sensor.

Bei einer optischen Markierung weisen die jeweils ersten Bereiche eine andere Farbe/Muster als die jeweils zweiten Bereiche auf. Der Sensor erfasst entsprechend die Farbe und/oder das Muster der Maßverkörperung. Der Sensor ist hierbei vorzugsweise als Kamera oder Farbsensor ausgebildet.

Anhand der zeitlichen Änderung des Drehwinkels kann überdies die Drehzahl der Welle oder des Zylinders bestimmt werden. Durch die Bestimmung der Drehzahl kann mittels linearer Approximation die Ausrichtung verbessert bestimmt werden.

Ein Zylinder kann eine Mahltrommel, insbesondere eine Mahltrommel einer Kugelmühle oder einer SAG-Mühle, ein bewegtes Reaktionsgefäß oder Mischgefäß sein.

Die Welle ist vorzugsweise mit einem großen Durchmesser ausgestaltet. Vorzugsweise ist die Welle als Schiffswelle ausgebildet.

Durch die Erfindung kann der Drehwinkel oder die Drehzahl eines Zylinders oder einer Welle mit einem besonders großen Durchmesser bestimmt werden. Vorzugsweise beträgt ein Durchmesser einer solchen Welle oder eines solchen Zylinders mehrere Meter. Als Welle in dieser Größenordnung kann ein Bohrgestänge einer Ölförderanlage oder der Bohrer einer Tunnelbohrmaschine dienen.

(PA2) Bei einer vorteilhaften Ausgestaltung der Erfindung ist der Sensor von der Mantelfläche der Welle oder des Zylinders beabstandet positioniert, wobei der Sensor den Abstand zwischen dem Sensor und der Außenseite der Maßverkörperung ermittelt.

Die Maßverkörperung wird vorzugsweise nahe eines Antriebs der Welle oder des Zylinders befestigt. Der Sensor ist vorzugsweise im Bereich eines Stators des Antriebs befestigt. Insbesondere bei einer direkt angetriebenen Mahltrommel kann der Sensor an einem Statorelement befestigt sein.

In dem Fall, dass der Zylinder oder die Welle an ihrer Mantelfläche ein Zahnrad aufweist, kann das Zahnrad als Maßverkörperung genutzt werden. Es muss demnach keine weitere Maßverkörperung an der Welle oder dem Zylinder befestigt werden. Der Sensor ist demnach im Bereich des Zahnrades zu positionieren.

Durch die Positionierung des Sensors in der Nähe der Maßverkörperung kann eine einfache und genaue Bestimmung des Drehwinkels und/oder der Drehzahl des Zylinders oder der Welle gewährleitet werden.

(PA3) Bei einer weiteren vorteilhaften Ausgestaltung der Erfindung ist die Maßverkörperung ein gewelltes, insbesondere ein Wellenband, oder geripptes Blech, welches auf der Mantelfläche der Welle oder des Zylinders befestigt ist.

Das Blech kann auch wie eine Sägezahnfunktion oder eine Rechteckfunktion geformt sein. Vorzugsweise weist das Blech eine Breite von 2 bis 10 cm auf.

Durch die Maßverkörperung, die entsprechend einer Rechteckfunktion geformt ist, kann die jeweilige Kante beim Übergang des ersten Bereichs zum zweiten Bereich scharf mit dem Sensor erfasst werden. So ist eine besonders stabile Ermittlung des Drehwinkels möglich.

Bei einem gerippten oder gewellten Band kann auch ein Drehwinkel zwischen dem jeweiligen Übergang der Bereiche erfasst werden.

Besonders vorteilhaft weist der Zylinder oder die Welle zwei Maßverkörperungen auf, die ein unterschiedliches Profil umfassen. So können die Vorteile unterschiedlicher Profile kombiniert werden. Vorzugsweise sind die Maßverkörperungen parallel angeordnet. Insbesondere durch eine benachbarte Anordnung der Mehrzahl von Maßverkörperungen können mehrere Maßverkörperungen mit einer Sensoreinheit, vorteilhaft umfassend mehrere Sensoren, gleichzeitig erfasst werden.

(PA4) Bei einer weiteren vorteilhaften Ausgestaltung der Erfindung ist die Maßverkörperung zumindest bereichsweise magnetisch, und der Sensor ist ein Magnetfeldsensor.

Beispielhaft zeichnet sich der erste Bereich jeweils durch einen Permanentmagnet aus. Darüber hinaus können sich die jeweils ersten Bereiche und zweiten Bereiche durch eine unterschiedliche magnetische Polung unterscheiden. Z. B. weisen die jeweils ersten Bereiche einen nach außen zeigenden magnetischen Südpol des Permanentmagneten und die jeweiligen zweiten Bereiche einen nach außen zeigenden magnetischen Nordpol auf.

Bevorzugt können auch die Magnete eines Rotors und somit der Rotor selbst als Maßverkörperung dienen. In einem solchen Fall kann der Sensor, der als Magnetfeldsensor ausgebildet ist, dem Stator zugeordnet sein.

Ein Sensor kann insbesondere als Hallsensor ausgebildet sein.

Durch die Ermittlung des Drehwinkels des Zylinders oder der Welle mit Hilfe von Magneten und einem Magnetfeld-Sensor kann eine sichere Ermittlung auch in einer besonders staubigen Umgebung erfolgen, bei der eine optische Erfassung einer Maßverkörperung ungeeignet ist.

**(PA5)** Bei einer weiteren vorteilhaften Ausgestaltung der Erfindung erfolgt die Bestimmung des Drehwinkels mit Hilfe einer linearen Progression oder Approximation.

Bei der Approximation wird davon ausgegangen, dass die Drehzahl des Zylinders oder der Welle im Wesentlichen konstant ist. Demnach wird vorzugsweise der jeweilige Drehwinkel zwischen den Übergängen vom ersten Bereich zum zweiten Bereich und umgekehrt linear approximiert.

Insbesondere bei einem stetig verändernden Abstand oder einem stetig verändernden Signal kann die Drehgeschwindigkeit durch eine zeitliche Ableitung bestimmt werden. Demnach kann der Drehwinkel zum einen durch das Signal des Sensors, als auch durch eine lineare Progression gemäß

$$\varphi = a \cdot \frac{d\varphi}{dt} + b$$

bestimmt werden.

Wobei a und b empirisch zu ermittelnde Kon-

stanten sind, φ den Drehwinkel angibt und t für die Zeit steht.

Besonders einfach erfolgt die Approximation/Progression bei Verwendung einer sinusförmigen Maßverkörperung, bei der der Abstand zwischen Sensor und Oberfläche der Maßverkörperung ermittelt wird.

Durch einen Vergleich von einem gemessenen und einem approximierten Drehwinkel kann eine besonders genaue Bestimmung des Drehwinkels und/oder der Drehzahl erfolgen.

**(PA5a)** In einer weiteren vorteilhaften Ausgestaltung der Erfindung weist die Maßverkörperung einen jeweils unterschiedlichen Abstand zwischen den jeweiligen Bereichen auf.

Durch einen jeweils unterschiedlichen Abstand zwischen den jeweiligen Übergängen kann ein absoluter Drehwinkel bzw. ein absoluter Drehwinkel der Welle oder des Zylinders bestimmt werden. Insbesondere eine Hinterlegung des jeweiligen Abstandes zwischen den jeweiligen Bereichen in Verbindung zu dem absoluten Drehwinkel oder zum absoluten (Dreh-) Winkel erleichtert die Bestimmung des absoluten Drehwinkels.

Vorzugsweise erfolgt eine jeweils periodisch abnehmende/zunehmende Beabstandung der jeweiligen Bereiche.

**(PA6)** Bei einer weiteren vorteilhaften Ausgestaltung weist die Welle oder der Zylinder mehrere, parallel angeordnete Maßverkörperungen auf und die ersten Bereiche und die zweiten Bereiche der jeweiligen Maßverkörperung sind in Umfangsrichtung versetzt zueinander angeordnet.

Vorzugsweise sind auf der Mantelfläche des Zylinders oder der Welle eine, zwei oder drei Maßverkörperungen parallel angeordnet. Besonders bevorzugt sind die Maßverkörperungen benachbart angeordnet, d. h. dass eine Maßverkörperungen sich an eine weitere Maßverkörperung anschmiegt oder nur um wenige Zentimeter beabstandet befestigt ist.

Vorzugsweise wechselwirkt die eine Maßverkörperung mit einem ersten Sensor und die weitere Maßverkörperung mit einem weiteren Sensor. Bevorzugt werden die Signale des jeweiligen Sensors miteinander verglichen.

Durch die versetzte Anordnung der Bereiche kann die Bestimmung des Drehwinkels vorteilhaft mehrfach erfolgen (auch als "Impulsvervielfachung" bezeichnet) und somit Fehler bei der Bestimmung des Drehwinkels oder der Drehzahl vermieden werden. Dadurch ist eine Ermittlung der Drehrichtung der Welle möglich.

**Beschreibung der Vorrichtung**

**(PA7)** Die Vorrichtung dient zur Bestimmung eines Drehwinkels einer Welle oder eines Zylinders, wobei der Zylinder oder die Welle auf einer Mantelfläche eine Maßverkörperung aufweist, wobei die Maßverkörperung erste und zweite Bereiche aufweist, wobei anhand der Abfolge der ersten Bereiche und der zweiten Bereiche oder einer weiteren Eigenschaft der Maßverkörperung eine Bestimmung des Drehwinkels und/oder der Drehzahl der Welle oder des Zylinders vorgesehen ist.

**(PA8)** In einer vorteilhaften Ausgestaltung der Erfindung weist die Vorrichtung einen Sensor auf, wobei der Sensor zur Erfassung der Abfolge der Bereiche und/oder der weiteren Eigenschaft der Maßverkörperung vorgesehen ist.

Der Sensor ist vorzugsweise bezüglich der Maßverkörperung radial beabstandet positioniert.

Vorzugsweise erfolgt die Bestimmung des (Dreh-) Winkels oder des Drehwinkels der Welle oder des Zylinders in Bezug zu einem Fixpunkt.

Vorzugsweise ist der Sensor so positioniert, dass der Sensor die Oberfläche der Maßverkörperung von oben abtastet. Alternativ kann der Sensor die Maßverkörperung auch von einer seitlichen Position abtasten. Bei dem Abtasten wird jeweils der Übergang von den ersten und zweiten Bereichen ermittelt.

Der Sensor ist vorzugsweise in einem gleichbleibenden Abstand zur Maßverkörperung positioniert. Die Maßverkörperung ist vorteilhaft aus einem ferromagnetischen Material wie Eisen oder einer ferromagnetischen Legierung hergestellt. Eine solche ferromagnetische Maßverkörperung kann von einem Magnetfeldsensor "abgetastet" werden.

Der Sensor kann alternativ als optischer Sensor, beispielhaft als Laserquelle in Kombination mit einem Lichtdetektor, ausgebildet sein. Weiter geeignet ist ein akustischer Sensor, beispielhaft mit einem Piezo-Element. Ein akustischer Sensor bestimmt vorzugsweise den Abstand zwischen der Oberfläche der Maßverkörperung und dem Sensor. Der Sensor stellt vorteilhaft ein Signal bereit, das proportional zum Abstand zwischen der Maßverkörperung und dem Sensor ist.

Durch die Vorrichtung kann der Drehwinkel eines Zylinders oder einer Welle einfach bestimmt werden.

Die Maßverkörperung ist vorzugsweise an mehreren Stellen an der Mantelfläche des Zylinders oder der Mantelfläche der Welle befestigt. Die Stellen, an denen die Maßverkörperung an der Mantelfläche befestigt ist, befinden sich vorzugsweise an den Bereichen, an denen die Maßverkörperung die Mantelfläche berührt.

In einer besonders einfachen Ausgestaltung der Vorrichtung erfolgt die Befestigung einer ringförmigen Maßverkörperung durch ein Aufschrumpfen oder dadurch, dass die Maßverkörperung um die Welle oder um den Zylinder herum gelegt wird und indem das eine Ende der Maßverkörperung mit dem anderen Ende verbunden wird.

**(PA9)** In einer weiteren vorteilhaften Ausgestaltung der Erfindung weist die Welle oder der Zylinder einen Durchmesser von mindestens einem Meter, vorzugsweise einen Durchmesser von mindestens 4 Meter auf.

Die Vorrichtung ist besonders gut für große Mahltrommeln von Erzmühlen oder Gesteinsmühlen geeignet. Die Vorrichtung kann mit dem Antrieb der Erz-

Ein wesentlicher Vorteil der Erfindung ist die mögliche Bestimmung des Drehwinkels und/oder der Drehgeschwindigkeit bei Wellen oder Zylindern mit einem großen Durchmesser. Insbesondere bei Durchmessern von Mahltrommeln, welche mehrere Meter betragen können, ist die hier beschriebene Bestimmung des Drehwinkels vorteilhaft.

Mit Hilfe der Vorrichtung kann eine Bewegung der Mahltrommel zu einem vorbestimmten Drehwinkel erfolgen.

Vorteilhaft kann eine hier beschriebene Vorrichtung auch mit einem bestehenden Zylinder oder mit einer bestehenden Welle gekoppelt werden.

Vorteilhaft ist die Vorrichtung dazu geeignet, auf besonders einfache Art und Weise den Drehwinkel einer Welle oder eines Zylinders zu bestimmen.

**(PA10)** Ein Antrieb für eine Mühle, insbesondere für eine Kugelmühle oder SAG-Mühle (Semi-Autogenous Grinding-Mühle), weist eine hier beschriebene Vorrichtung, insbesondere nach einem der Ansprüche 7 oder 8, auf.

Der Antrieb umfasst vorzugsweise eine elektrische Maschine, eine Stromversorgung für die elektrische Maschine, insbesondere einen Frequenzumrichter, und eine Steuereinrichtung auf. Das Signal des Sensors wird vorzugsweise der Steuereinrichtung und/oder der Stromversorgung bereitgestellt.

Vorzugsweise wird das Signal des Sensors verstärkt, bevor das Signal, ausgehend vom Sensor der Spannungsquelle, insbesondere dem Frequenzumrichter, bereitgestellt wird.

Durch die Bestimmung des Drehwinkels und/oder der Drehzahl des Zylinders oder der Welle ist eine geregelte Drehbewegung der Welle oder des Zylinders möglich.

**(PA11)** In einer vorteilhaften Ausgestaltung der Erfindung ist der Antrieb als ein getriebeloser Antrieb oder ein Direktantrieb, insbesondere als ein segmentierter Direktantrieb, ausgebildet.

Unter einem segmentierten Direktantrieb wird ein Antrieb verstanden bei dem der Rotor und/oder der Stator eine Mehrzahl von Segmenten aufweist. Die Segmente des Rotors sind vorteilhaft um die Welle oder um den Zylinder angeordnet. Die Segmente des Stators können den Rotor zumindest teilweise umfassen. Der Stator und/oder der Rotor weisen aktive (Spulen) und/oder passive Elemente (Permanentmagnet) auf, welche die Drehbewegung der Welle oder des Zylinders zu induzieren vermögen.

Ein segmentierter Antrieb ist vor allem bei großen Durchmessern eines Zylinders, insbesondere einer Mahltrommel oder einem Mahlrohr, vorteilhaft.

**(PA12)** Die Mühle, insbesondere zum Mahlen von Erz, weist einen hier beschriebenen Antrieb, insbesondere nach einem der Ansprüche 9 oder 10, auf.

**Beschreibung des Herstellungsverfahrens**

**(PA13)** Verfahren zur Herstellung einer Vorrichtung zur Bestimmung eines Drehwinkels einer Welle oder eines Zylinders, wobei eine Maßverkörperung um die Mantelfläche des Zylinders oder der Welle so befestigt wird, dass ein beabstandet zu positionierender Sensor anhand der Maßverkörperung den Drehwinkel und/oder die Drehzahl des Zylinders oder der Welle feststellen kann.

Die Maßverkörperung wird vorteilhaft um den Zylinder herum geformt und an einer oder an mehreren Stellen mit der Mantelfläche des Zylinders oder der Welle verbunden. Zur Verbindung dienen vorzugsweise Befestigungselemente wie Schrauben oder eine Nietverbindung.

Vorzugsweise nach der Positionierung der Maßverkörperung wird zumindest ein Sensor jeweils zu der Maßverkörperung beabstandet positioniert.

In dem Fall, dass der Zylinder oder die Welle an ihrer Mantelfläche ein Zahnrad aufweist, kann das Zahnrad als Maßverkörperung genutzt werden. Der Sensor ist demnach im Bereich des Zahnrades zu positionieren. Der Sensor erfasst die Oberfläche des Zahnkranzes optisch oder akustisch. Der Sensor bestimmt vorteilhaft den Abstand zwischen dem Sensor und der Oberfläche des Zahnrades/des Zahnkranzes.

Durch die einfache und kostengünstige Herstellung der hier beschriebenen Vorrichtung kann die Drehzahl und/oder der Drehwinkel einer Welle oder eines Zylinders einfach und preisgünstig ermittelt werden.

Im Folgenden wird die Erfindung durch Figuren näher beschrieben und erläutert. Die in den Figuren gezeigten Ausgestaltungen sind lediglich beispielhaft und schränken die Erfindung keinesfalls ein.

Es zeigen:

FIG 1     eine Welle mit Maßverkörperung,

FIG 2     eine Maßverkörperung und ein Sensor,

FIG 3     ein Ausschnitt einer Mantelfläche mit einer Maßverkörperung,

FIG 4     eine Bestimmung der Drehzahl

FIG 5     eine Mühle mit einem Antrieb.

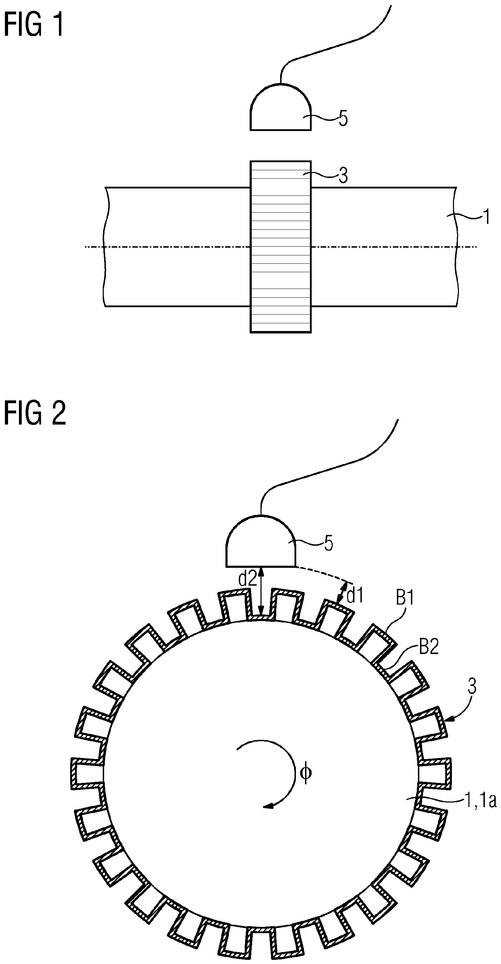

FIG 1 zeigt eine Welle 1 mit einer Maßverkörperung 3. Die Welle 1 weist an ihrer Mantelfläche die Maßverkörperung 3 auf, so dass bei einem Drehen der Welle 1 die Maßverkörperung 3 bewegt wird. Die Bewegung der Maßverkörperung 3 wird durch einen Sensor 5 detektiert. Die Maßverkörperung 3 weist erste Bereiche B1 und zweite Bereiche B2 auf. Die ersten Bereiche und zweiten Bereiche sind jeweils abwechselnd auf der Maßverkörperung 3 angeordnet. Der Sensor 5 dient zur Bestimmung, ob ein erster Bereich B1 oder ein zweiter Bereich B2 im Einflussbereich des Sensors 5 steht.

FIG 2 zeigt eine Maßverkörperung 3 und einen Sensor 5. Der Sensor 5 ist beabstandet von der Maßverkörperung 3 angeordnet. Die Maßverkörperung 3 ist um eine Welle 1 oder um einen Zylinder 1a gefügt. Die Maßverkörperung 3 ist hier als gewelltes Blech ausgebildet. Das gewellte Blech ist analog einer Rechteckfunktion geformt. Die ersten Bereiche B1 weisen demnach einen geringeren ersten Abstand d1 zum Sensor 5 auf. Die zweiten Bereiche B2, die nahe der Mantelfläche des Zylinders 1a bzw. der Welle 1 angeordnet sind, weisen einen zweiten Abstand d2 zum Sensor auf. Der zweite Abstand d2 ist größer als der erste Abstand d1. Bei einer Rotation des Zylinders 1a oder der Welle 1 um den Drehwinkel φ ändert sich der Abstand der Maßverkörperung 3 jeweils von einem ersten Abstand d1 zu einem zweiten Abstand d2 und umgekehrt. Bei Rotation der Welle 1 bzw. des Zylinders 1a wechselt der registrierte erste Abstand d1 und der registrierte zweite Abstand d2 zwischen Maßverkörperung 3 und dem Sensor 5 fortlaufend.

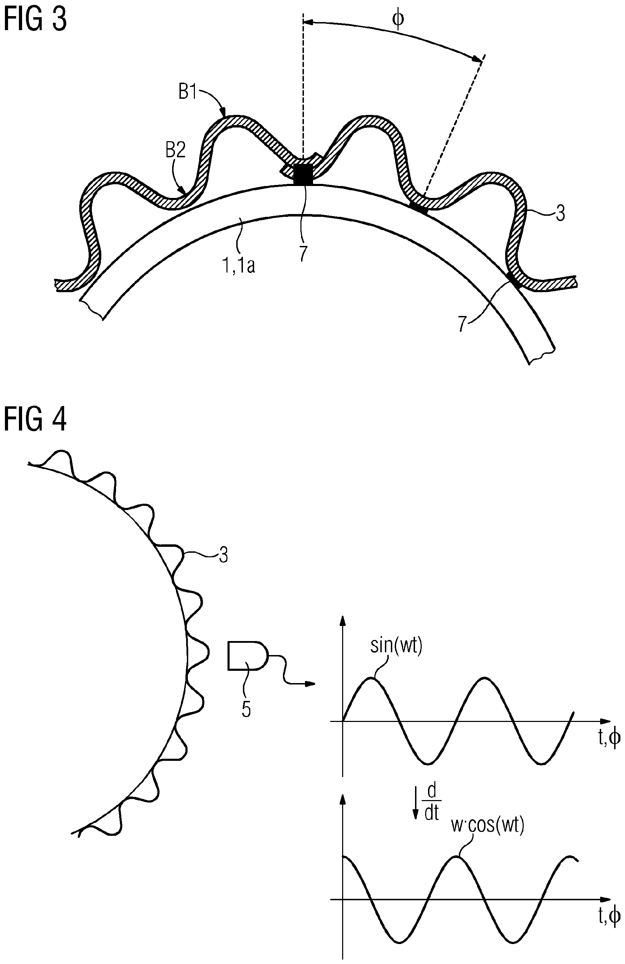

FIG 3 zeigt einen Ausschnitt einer Mantelfläche mit einer Maßverkörperung 3. Die Maßverkörperung 3 ist durch ein sinusförmig gewelltes Metallband ausgebildet. Die Maßverkörperung 3 ist mit Befestigungsmitteln 7 an der Mantelfläche des Zylinders bzw. der Welle 1 befestigt. Die beiden Enden der um den Zylinder 1a bzw. um die Welle 1 umfassenden Maßverkörperung 3 sind an den jeweiligen Enden ebenfalls mit einem Befestigungsmittel 7 zusammengefügt. Der erste Bereich B1 der Maßverkörperung 3 ist als der Bereich B1, B2 gekennzeichnet, bei dem der Abstand d1 zwischen der Oberfläche der Maßverkörperung 3 und dem Sensor 5 größer als der mittlere Abstand zwischen der Oberfläche der Maßverkörperung und dem Sensor 5 ist. Jeweils zwischen den ersten Bereichen B1 sind jeweils zweite Bereiche B2 angeordnet. Die jeweilige Mitte des ersten Bereichs B1 bzw. des zweiten Bereichs B2 stellen die Bäuche bzw. die Senken der sinusförmigen Maßverkörperung 3 dar. Die jeweiligen Mittelpunkte der Bereiche B1, B2 unterscheiden sich in ihrem Drehwinkel φ und schließen den Drehwinkel φ ein.

FIG 4 zeigt eine Bestimmung der Drehzahl w des Zylinders 1a bzw. der Welle 1. Zur Bestimmung der Drehzahl w oder des Drehwinkels φ ist der Sensor 5 beabstandet zur der sich drehenden Maßverkörperung 3 positioniert. Der Sensor 5 detektiert den Abstand d1, d2 zwischen dem Sensor 5 und der Oberfläche der Maßverkörperung 3. Die Detektion erfolgt als Funktion der Zeit t. Bei einer gleichmäßigen Bewegung ist der Drehwinkel φ und die Zeit t proportional. Der Sensor 5 stellt ein sinusförmiges Signal der Form $\sin(wt)$ dar. Zur Bestimmung der Drehzahl erfolgt die zeitliche Ableitung nach der Zeit, wobei aus der zeitlichen Funktion des Drehwinkels $\varphi=(\sin(wt))$ die Drehzahl $d\varphi/dt=w\cdot\cos(wt)$ entsteht. $d\varphi/dt$ ist demnach die zu bestimmende Drehzahl w.

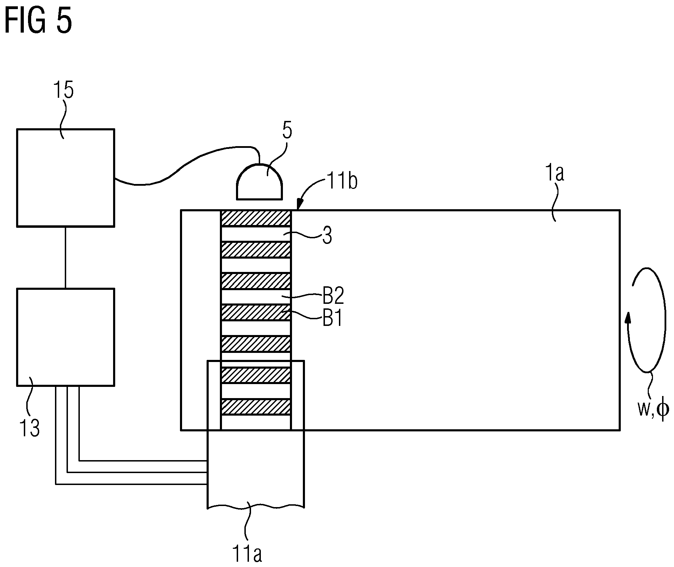

FIG 5 zeigt eine Mühle mit einem Antrieb. Der Antrieb umfasst einen Stator 11a, der mit einer Spannungsstromversorgung 13 gekoppelt ist. Weiter umfasst der Antrieb eine Steuereinrichtung 15. Die Steuereinrichtung 15 ist mit dem Sensor 5 verbunden, wobei der Sensor 5 von der Maßverkörperung 3 beabstandet ist. Die Maßverkörperung 3 weist hier erste Bereiche B1 und zweite Bereiche B2 auf. Die Maßverkörperung 3 ist hier gleichzeitig als Rotor 11b ausgebildet. Das Zusammenspiel des Stators 11a und des Rotors 11b dient zur Drehbewegung des Zylinders 1a. Der Zylinder 1 ist hier als Mahltrommel ausgebildet.

Zusammenfassend betrifft die Erfindung ein Verfahren und eine Vorrichtung zur Bestimmung eines Drehwinkels φ eines Zylinders 1a oder einer Welle 1. Die Bestimmung des Drehwinkels φ erfolgt mit Hilfe einer Maßverkörperung 3, wobei die Maßverkörperung 3 vorzugsweise um die Mantelfläche der Welle 1 oder des Zylinders 1a herum geführt ist. Die Maßverkörperung 3 ist vorteilhaft als gewelltes Metallband ausgebildet. Die Maßverkörperung 3 weist abwechselnd erste Bereiche B1 und zweite Bereiche B2 auf, wobei die ersten Bereiche B1 und die zweiten Bereiche B2 mittels des Sensors 5 unterscheidbar ausgebildet sind. Der von der Maßverkörperung 3 beabstandet positionierte Sensor 5 dient vorteilhaft zur Bestimmung des Abstandes d1, d2 zwischen dem Sensor 5 und der Oberfläche der Maßverkörperung 3. Bei einem vorteilhaften Verfahren zur Herstellung der Vorrichtung wird die Maßverkörperung 3 um die Welle 1 oder den Zylinder 1a gewickelt und der Sensor 5 beabstandet von der Mantelfläche der Maßverkörperung 3 positioniert. Durch die Erfindung ist es möglich, einen Drehwinkel φ von Wellen 1 oder Zylindern 1a mit einem besonders großen Durchmesser einfach zu bestimmen.

**Patentansprüche**

1. Verfahren zur Bestimmung eines Drehwinkels (φ) einer Welle (1) oder eines Zylinders (1a), insbesondere einer Mahltrommel, wobei die Welle (1) oder der Zylinder (1a) an einer Außenseite eine Maßverkörperung (3) aufweist, wobei die Maßverkörperung (3) jeweils abwechselnd erste Bereiche (B1) und zweite Bereiche (B2) aufweist, wobei (5) anhand eines Wechsels der Bereiche (B1, B2) oder einer Eigenschaft der Maßverkörperung (3) der Drehwinkel (φ) der Welle (1) oder des Zylinders (1a) festgestellt wird.

2. Verfahren nach Anspruch 1, wobei ein Sensor (5) von der Mantelfläche der Welle (1) oder des Zylinders (1a) beabstandet positioniert ist und der Sensor (5) den Abstand (d1, d2) zwischen dem Sensor (5) und der Außenseite der Maßverkörperung (3) ermittelt.

3. Verfahren nach Anspruch 1 oder 2, wobei die Maßverkörperung (3) ein gewelltes oder geripptes Blech, insbesondere ein Wellenband, ist, welches auf der Mantelfläche der Welle (1) oder des Zylinders (1a) befestigt ist.

4. Verfahren nach einem der vorangehenden Ansprüche, wobei die Maßverkörperung (3) zumindest bereichsweise magnetisch ist und der Sensor (5) ein Magnetfeldsensor ist.

5. Verfahren nach einem der vorangehenden Ansprüche, wobei die Bestimmung des Drehwinkels ($\varphi$) mit Hilfe einer linearen Progression oder Approximation erfolgt.

6. Verfahren nach einem der vorangehenden Ansprüche, wobei die Welle (1) oder der Zylinder (1a) mehrere, parallel angeordnete Maßverkörperungen (3) aufweist und die ersten Bereiche (B1) und die zweiten Bereiche (B2) der jeweiligen Maßverkörperung (3) in Umfangsrichtung versetzt zueinander angeordnet sind.

7. Vorrichtung zur Bestimmung eines Drehwinkels ($\varphi$) einer Welle (1) oder eines Zylinders (1a), wobei der Zylinder (1a) oder die Welle (1) auf einer Mantelfläche eine Maßverkörperung (3) aufweist, wobei die Maßverkörperung (3) erste Bereiche (B2) und zweite Bereiche (B2) aufweist, wobei anhand der Abfolge der ersten Bereiche (B1) und der zweiten Bereiche (B2) oder eine weitere Eigenschaft der Maßverkörperung (3) zur Bestimmung des Drehwinkels ($\varphi$) und/oder einer Drehzahl (w) der Welle (1) oder des Zylinders (1a) vorgesehen ist.

8. Vorrichtung nach Anspruch 7, zusätzlich aufweisend einen Sensor (5), wobei der Sensor zur Erfassung der Abfolge der Bereiche (B1, B2) und/oder der weiteren Eigenschaft der Maßverkörperung (3) vorgesehen ist.

9. Vorrichtung nach Anspruch 7 oder 8, wobei die Welle (1) oder der Zylinder (1a) einen Durchmesser von mindestens einem Meter, vorzugsweise einen Durchmesser von mindestens 4 Metern aufweist.

10. Antrieb für eine Mühle, insbesondere für eine Kugelmühle oder SAG-Mühle, aufweisend eine Vorrichtung nach einem der Ansprüche 7 bis 9.

11. Antrieb nach Anspruch 10, wobei der Antrieb ein getriebeloser Antrieb oder Direktantrieb, insbesondere ein segmentierter Direktantrieb, ist.

12. Mühle, insbesondere zum Mahlen von Erz, aufweisend einen Antrieb nach einem der Ansprüche 10 oder 11.

13. Verfahren zur Herstellung einer Vorrichtung zur Bestimmung des Drehwinkels ($\varphi$) einer Welle (1) oder eines Zylinders (1a), wobei eine Maßverkörperung (3) um die Mantelfläche des Zylinders (1) oder der Welle (1a) so befestigt wird, dass ein beabstandet zu positionierender Sensor (5) anhand der Maßverkörperung (3) den Drehwinkel ($\varphi$) und/oder die Drehzahl (w) des Zylinders (1) oder der Welle (1a) feststellen kann.

FIG 1

FIG 2

FIG 3

$\phi$

B1

B2

3

1,1a

7

7

FIG 4

3

5

$\sin(wt)$

t,$\phi$

$\frac{d}{dt}$

$w \cdot \cos(wt)$

t,$\phi$

## FIG 5

Europäisches Patentamt

European Patent Office

Office européen des brevets

## EUROPÄISCHER RECHERCHENBERICHT

**Nummer der Anmeldung**

EP 18 17 0600

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 642 252 A1 (SCHLEIFRING UND APPBAU GMBH [DE]) 25. September 2013 (2013-09-25) * Zusammenfassung * * Absätze [0001], [0007], [0008], [0015] - [0018] * * Absatz [0021] - Absatz [0023]; Abbildungen 1-3 * * Absatz [0025] - Absatz [0026]; Abbildungen 5,6 * * Anspruch 1 * ----- | 1-13 | INV. G01D5/14 G01D5/347 |
| X | US 4 646 010 A (BYSTROEM KARL [SE] ET AL) 24. Februar 1987 (1987-02-24) * Zusammenfassung * * Spalte 2, Zeile 20 - Zeile 58; Abbildung 1 * * Spalte 2, Zeile 58 - Zeile 68; Abbildung 2 * * Spalte 3, Zeile 42 - Zeile 45 * ----- | 1-13 | |
| X | US 2007/152661 A1 (TANIGUCHI MITSUYUKI [JP] ET AL) 5. Juli 2007 (2007-07-05) * Zusammenfassung * * Absatz [0004] - Absatz [0010]; Abbildungen 1A-1C * * Absatz [0032] - Absatz [0033]; Abbildung 4 * ----- | 1,2,4-8, 13 | RECHERCHIERTE SACHGEBIETE (IPC) G01D G01P F16C |
| X | EP 0 682 228 A1 (MANNESMANN AG [DE]) 15. November 1995 (1995-11-15) * Zusammenfassung * * Spalte 2, Zeile 45 - Spalte 3, Zeile 11; Abbildung 1 * ----- -/-- | 1-4,7-13 | |

Der vorliegende Recherchenbericht wurde für alle Patentansprüche erstellt

| Recherchenort | Abschlußdatum der Recherche | Prüfer |
|---|---|---|
| München | 9. Oktober 2018 | Jakob, Clemens |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

EP 18 17 0600

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | GB 757 922 A (ICI LTD) 26. September 1956 (1956-09-26) * Spalte 2, Zeile 37 - Zeile 58; Abbildung 1 * * Spalte 2, Zeile 59 - Spalte 3, Zeile 82; Abbildung 3 * ----- | 1,6,7 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 9. Oktober 2018 | Jakob, Clemens |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
 Dokument

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**

EP 18 17 0600

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-10-2018

| Im Recherchenbericht angeführtes Patentdokument | Datum der Veröffentlichung | Mitglied(er) der Patentfamilie | Datum der Veröffentlichung |
|---|---|---|---|
| EP 2642252 A1 | 25-09-2013 | KEINE | |
| US 4646010 A | 24-02-1987 | DE 3476911 D1 | 06-04-1989 |
| | | EP 0176513 A1 | 09-04-1986 |
| | | JP S60501625 A | 26-09-1985 |
| | | SE 440693 B | 12-08-1985 |
| | | US 4646010 A | 24-02-1987 |
| | | WO 8500220 A1 | 17-01-1985 |
| US 2007152661 A1 | 05-07-2007 | CN 1712901 A | 28-12-2005 |
| | | EP 1610097 A1 | 28-12-2005 |
| | | JP 4085074 B2 | 30-04-2008 |
| | | JP 2006010436 A | 12-01-2006 |
| | | US 2005285592 A1 | 29-12-2005 |
| | | US 2007152661 A1 | 05-07-2007 |
| EP 0682228 A1 | 15-11-1995 | DE 4416046 A1 | 16-11-1995 |
| | | EP 0682228 A1 | 15-11-1995 |
| GB 757922 A | 26-09-1956 | KEINE | |

EPO FORM P0461

Für nähere Einzelheiten zu diesem Anhang : siehe Amtsblatt des Europäischen Patentamts, Nr.12/82